(19) **Europäisches Patentamt / European Patent Office / Office européen des brevets**

(11) **EP 4 625 931 A1**

(12) **DEMANDE DE BREVET EUROPEEN**

(43) Date de publication:
**01.10.2025 Bulletin 2025/40**

(21) Numéro de dépôt: **25166030.4**

(22) Date de dépôt: **25.03.2025**

(51) Classification Internationale des Brevets (IPC):
**H04L 43/04** (2022.01)  **H04L 43/0882** (2022.01)
**H04L 43/106** (2022.01)  **H04L 43/12** (2022.01)
**H04L 43/55** (2022.01)  **H04L 43/0894** (2022.01)

(52) Classification Coopérative des Brevets (CPC):
**H04L 43/0882; H04L 43/04; H04L 43/0894; H04L 43/106; H04L 43/12; H04L 43/55**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **26.03.2024 FR 2403007**

(71) Demandeur: **Airbus Defence and Space SAS 31402 Toulouse Cedex 4 (FR)**

(72) Inventeurs:
• **SCHNEIDER, François 78990 ELANCOURT (FR)**
• **PLAINFOSSE, David 78990 ELANCOURT (FR)**

(74) Mandataire: **Cabinet Le Guen Maillet 3, impasse de la Vigie CS 71840 35418 Saint-Malo Cedex (FR)**

(54) **PROCÉDÉ DE DÉTERMINATION DE BANDE PASSANTE D'UN LIEN DE COMMUNICATION**

(57) Un procédé de détermination de bande passante sur un lien de communication entre un premier point de terminaison, auquel est associée une première sonde réseau, et un second point de terminaison, auquel est associée une seconde sonde réseau, est décrit. Des paquets fanions sont injectés (403), par la première sonde réseau, pour fournir des repères temporels. Des informations d'horodatage de capture des paquets fanions sont collectées par la seconde sonde réseau, ainsi que des mesures (405) de volumétrie de données en sortie du lien de communication. Un trafic de bourrage est injecté (404) par la première sonde réseau de sorte à créer une situation de congestion sur le lien de communication pendant une période de test. Ainsi, en déterminant quelle bande passante est consommée pendant la période de test, la bande passante du lien de communication est déterminée (408).

[Fig. 4]

Détection de tunnel de communication — 401

Mise en place de communications inter-sondes — 402

Déclenchement d'injection de paquets fanions — 403

Déclenchement d'injection de trafic de bourrage — 404

Mesures de volumétrie de trafic du tunnel de communication — 405

Arrêt d'injection de trafic de bourrage — 406

Arrêt d'injection de paquets fanion — 407

Calcul de bande passante à partir des mesures volumétriques de trafic — 408

EP 4 625 931 A1

## Description

DOMAINE TECHNIQUE

La présente invention concerne un procédé de détermination de bande passante d'un lien de communication grâce à des sondes réseau qui surveillent (« monitor » en anglais) du trafic passant par le lien de communication dans un réseau de communication, par exemple de type WAN (« Wide Area Network » en anglais).

ETAT DE LA TECHNIQUE ANTERIEURE

Les réseaux de communication servent à offrir une grande diversité de services, comme l'échange de communication voix, typiquement des services dits de VoIP (« Voice over IP » en anglais), l'échange de communication audiovisuelle, la diffusion de programmes multimédia, ou encore l'accès à des données, typiquement l'accès à des services Web. Ces services ont des besoins différents en termes de latence de transmission dans les réseaux de communication, et ont des priorités différentes.

Les liens de communication sur lesquels reposent les réseaux de communication sont basés sur des technologies de transmission physique qui peuvent être très diverses. Chacune de ces technologies conduit à des propriétés différentes de canal de transmission utilisé en termes de capacités, c'est-à-dire en bande passante disponible, taux d'erreur, ou variabilité de cette bande passante disponible.

De manière à gérer de manière adéquate l'admission de services en tenant compte de ces propriétés différentes de canal de transmission, des sondes réseau sont utilisées pour analyser le trafic transitant dans ces réseaux de communication, et notamment dans des tunnels de communication établis entre des routeurs de ces réseaux de communication.

Une difficulté réside dans la détermination exacte de la bande passante de ces réseaux de communication. En effet, la bande passante réellement disponible dans un réseau de communication peut être inférieure à la bande passante théoriquement disponible dans ce réseau de communication, notamment à cause d'aléas environnementaux. Il est notamment connu qu'une variation de conditions environnementales météorologiques peut affecter la bande passante disponible sur un lien de communication satellite ou optique, ou qu'une variation de conditions environnementales électromagnétiques peut affecter la bande passante disponible sur câble de communication non blindé.

Il est alors souhaitable de pallier au moins cet inconvénient de l'état de la technique antérieure, et ce, de manière simple, efficace et peu coûteuse.

EXPOSE DE L'INVENTION

A cet effet, il est proposé un procédé de détermination de bande passante sur un lien de communication sur lequel est transporté un flux de données entre un premier point de terminaison en entrée du lien de communication, auquel est associée une première sonde réseau, et un second point de terminaison en sortie du lien de communication, auquel est associée une seconde sonde réseau, le procédé comportant les étapes suivantes :

- injecter de façon périodique, par la première sonde réseau, des paquets fanions sur le lien de communication, les paquets fanions fournissant des repères temporels au flux de données sur le lien de communication ;
- collecter des informations d'horodatage de capture desdits paquets fanions par la seconde sonde réseau et des informations de volumétrie de données en sortie du lien de communication ;
- injecter, par la première sonde réseau, un trafic de bourrage de sorte à créer une situation de congestion sur le lien de communication pendant une période de test ;
- déterminer quelle bande passante est consommée pendant la période de test ; et
- déterminer la bande passante du lien de communication comme étant ladite bande passante consommée.

Ainsi, grâce à la situation de congestion sur le lien de communication qui est créée par le trafic de bourrage, la capacité du lien de communication est utilisée au maximum, et la bande passante consommée est égale à la bande passante du lien de communication.

Selon un mode de réalisation particulier, le lien de communication est un tunnel de communication dans un réseau de communication étendu.

Selon un mode de réalisation particulier, le flux de données transporté par le lien de communication comporte des sous-flux de données ayant des types de service distincts.

Selon un mode de réalisation particulier, les paquets fanions sont injectés pour chaque type de service parmi lesdits types de service distincts.

Selon un mode de réalisation particulier, le trafic de bourrage a un type de service dédié.

Selon un mode de réalisation particulier, le type de service dédié au trafic de bourrage est associé à la priorité la plus faible parmi lesdits types de service distincts.

Selon un mode de réalisation particulier, la bande consommée est calculée pour chaque type de service parmi lesdits types de service distincts, et la bande passante du lien de communication est obtenue en sommant la bande passante consommée calculée pour chaque type de service.

Selon un mode de réalisation particulier, pour collecter les informations d'horodatage de capture et les informations de volumétrie, la deuxième sonde réseau comporte au moins une table de mesures pour stocker un historique d'échantillonnages de paquets fanions capturés en sortie du tunnel de communication, chaque entrée de la table de mesures correspondant à un échantillon comportant :

- un champ d'information d'horodatage marquant l'instant auquel le paquet fanion correspondant à l'échantillon en question a été capturé ;
- un champ de numéro de séquence tel que contenu dans le paquet fanion correspondant à l'échantillon en question ; et
- un champ de comptage de données transitant sur le lien de communication entre le paquet fanion correspondant à l'échantillon en question et le paquet fanion correspondant à l'échantillon suivant dans la table de mesures.

Selon un mode de réalisation particulier, la première sonde réseau transmet à la seconde sonde réseau une requête requérant de transmettre en réponse des informations de bande passante consommée qui sont dérivées par calculs d'un historique d'échantillonnages des paquets fanions reçus par la seconde sonde réseau, la requête incluant une information d'intervalle de numéros de séquence de paquets fanions à considérer pour définir ledit historique sur la période de test.

Selon un mode de réalisation particulier, lorsqu'à cause de pertes de paquets, l'historique d'échantillonnages disponible en mémoire de la seconde sonde ne correspond pas exactement à l'historique d'échantillonnages demandé par la requête, la seconde sonde réseau retrouve en mémoire un historique d'échantillonnages le plus proche de l'historique d'échantillonnages demandé, et indique en réponse à la requête quel intervalle de numéros de séquence de paquets fanions a été effectivement retrouvé.

Il est également proposé ici un système de communication comportant un lien de communication sur lequel est transporté un flux de données entre un premier point de terminaison en entrée du lien de communication, auquel est associée une première sonde réseau, et un second point de terminaison en sortie du lien de communication, auquel est associée une seconde sonde réseau, le système comportant de la circuiterie électronique configurée pour effectuer une détermination de bande passante en :

- injectant de façon périodique, par la première sonde réseau, des paquets fanions sur le lien de communication, les paquets fanions fournissant des repères temporels au flux de données sur le lien de communication ;
- collectant des informations d'horodatage de capture desdits paquets fanions par la seconde sonde réseau et des informations de volumétrie de données en sortie du lien de communication ;
- injectant, par la première sonde réseau, un trafic de bourrage de sorte à créer une situation de congestion sur le lien de communication pendant une période de test ;
- déterminant quelle bande passante est consommée pendant la période de test ; et en
- déterminant la bande passante du lien de communication comme étant ladite bande passante consommée.

BREVE DESCRIPTION DES DESSINS

La description suivante d'au moins un mode de réalisation est établie en relation avec les dessins joints, parmi lesquels :

[Fig. 1A] illustre schématiquement un système de communication ;
[Fig. 1B] illustre schématiquement un agencement de sonde réseau ;
[Fig. 2] illustre schématiquement une mise en relation de sondes réseau avec un orchestrateur ;
[Fig. 3] illustre schématiquement un exemple d'architecture matérielle permettant l'implémentation des sondes réseau du système de communication ;
[Fig. 4] illustre schématiquement un organigramme de détermination de bande passante d'un tunnel de communication ;
[Fig. 5] illustre schématiquement une variation de cadencement de flux de données dans un tunnel de communication ;
[Fig. 6] illustre schématiquement une variation de cadencement de deux sous-flux de données dans le tunnel de communication, avec présence d'un trafic de bourrage ;
[Fig. 7] illustre schématiquement un organigramme de création et de mise à jour d'une ou plusieurs tables de mesures stockant des informations volumétriques de trafic dans le tunnel de communication ;
[Fig. 8] illustre schématiquement un exemple de structure de table de mesures ; et
[Fig. 9] illustre schématiquement une coopération entre des sondes réseau en amont et en aval du tunnel de communication pour déterminer une bande passante disponible pour le tunnel de communication.

EXPOSE DETAILLE DE MODES DE REALISATION

La description détaillée est présentée dans un contexte de détermination de bande passante dans le cadre d'une utilisation de tunnel de communication dans un réseau étendu WAN (« Wide Area Network » en anglais). La détermination de bande passante est opérée de manière plus générale sur un lien de communication, tel que par exemple un lien satellite, dont les points de terminaison sont munis de sondes réseau comme décrit ci-après.

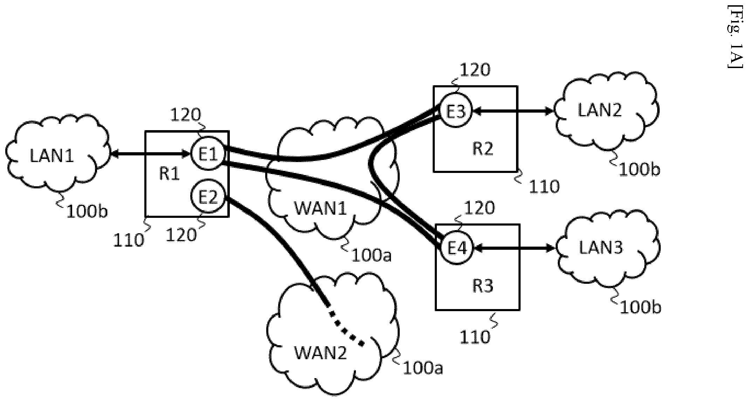

La Fig. 1A illustre schématiquement un système de communication dans lequel la présente invention peut être utilisée.

Le système de communication comporte une pluralité de routeurs 110. Trois routeurs R1 à R3 sont représentés, à titre illustratif, sur la Fig. 1A. Les routeurs 110 sont interconnectés par au moins un réseau de communication 100a sur lequel lesdits routeurs 110 établissent des tunnels de communication. Ainsi, les routeurs 110 comportent au moins un point de terminaison (« end-point » en anglais) 120 de tunnel de communication. Chaque point de terminaison 120 peut concerner un ou plusieurs tunnels de communication.

Chaque réseau de communication 100a peut être de nature variée, qu'elle soit filaire comme par exemple des liens Ethernet, ou de la fibre optique, ou radio comme par exemple des liens satellites. Deux réseaux de communications 100a WAN1 et WAN2, de type réseaux étendus WAN, sont représentés à titre illustratif sur la Fig. 1A.

Les tunnels de communication sont par exemple implémentés grâce au protocole GRE (« Generic Routing Encapsulation » en anglais), ou au protocole mGRE (« Multipoint Generic Routing Encapsulation » en anglais), ou à la famille de standards IPSec (« Internet Protocol Security » en anglais). D'autres protocoles de mise en tunnel peuvent être utilisés en variante.

Préférentiellement, les tunnels de communications sont sécurisés par chiffrement, de sorte que les données encapsulées dans le protocole d'encapsulation du tunnel de communication ne soient pas déchiffrables par un dispositif qui serait situé entre les deux points de terminaison 120 du tunnel de communication.

Par exemple, les tunnels de communication sont utilisés pour mettre en relation d'autres réseaux de communication 100b par le biais desdits routeurs 110. Comme illustré sur la Fig. 1A, les routeurs 110 et les tunnels de communication permettent d'interconnecter des réseaux locaux LAN (« Local Area Network » en anglais), comme des réseaux WLAN (« Wireless Local Area Network » en anglais), par exemple de la famille de standard IEEE 802.11. Dans un mode de réalisation particulier, le système de communication permet ainsi de mettre en relation sécurisée des terminaux présents sur des réseaux locaux LAN1, LAN2, LAN3 100b (appelés réseaux rouges) au travers du réseau étendu WAN1 100a (appelé réseau noir, car de niveau de sécurité inférieur aux réseaux rouges). Ainsi, de manière illustrative sur la Fig. 1A, un premier tunnel de communication est établi sur le réseau WAN1 entre un point de terminaison E1 du routeur R1 et un point de terminaison E3 du routeur R2, et un deuxième tunnel de communication est établi sur le réseau WAN1 entre le point de terminaison E1 et un point de terminaison E4 du routeur R3. Un troisième tunnel de communication est établi sur le réseau WAN1 entre le point de terminaison E3 du routeur R2 et le point de terminaison E4 du routeur R3. Un quatrième tunnel de communication est établi sur le réseau WAN2 entre un point de terminaison E2 du routeur R1 et un point de terminaison 120 d'un autre routeur non représenté.

Le système de communication est équipé de sondes réseau (« network probe » en anglais). Les sondes réseau sont des dispositifs agencés et configurés pour effectuer des mesures de débit de données entrant dans les tunnels de communication et de données sortant des tunnels de communication, c'est-à-dire au niveau des points de terminaison 120 des tunnels de communication, de manière à pouvoir détecter et évaluer des situations de congestion dans le ou les réseaux de communication 100a.

Les mesures de débit sont des mesures, sur des périodes temporelles délimitées par des paquets fanions (« flag packets » en anglais), de volumes de données encapsulées dans le protocole des tunnels de communication. Les sondes réseau peuvent être incluses dans les routeurs 110 ou y être connectées, dès lors que lesdites sondes réseau ont accès au plan de données des routeurs 110 afin de pouvoir mettre en place un protocole de communication inter-sondes et de pouvoir injecter des paquets fanions afin de cadencer les mesures de débit de données dans les tunnels de communication, et de capter le volume de paquets transmis dans les tunnels de communication et les paquets fanions y afférents.

Le protocole de communication inter-sondes permet aux sondes réseau des points de terminaison 120 d'un même tunnel de communication de s'envoyer des informations relatives auxdites mesures, afin de réaliser des évaluations de bande passante dans le ou les réseaux de communication 100a. Ces évaluations de bande passante permettent au besoin d'ajuster l'admission des services dans le ou les réseaux de communication 100a (c'est-à-dire accepter / refuser / clore / modifier / rediriger des communications dans le ou les réseaux de communication 100a).

L'agencement présenté ci-dessus permet d'assurer que le protocole de communications inter-sondes emprunte le même chemin que les paquets du tunnel de communication supervisé par les sondes réseau en question.

Une dite sonde réseau est ainsi associée à chaque point de terminaison 120 des tunnels de communication à surveiller en termes de débit de données encapsulées. A noter que des tunnels de communication peuvent exister dans le système de communication alors qu'aucune sonde réseau n'est mise en place à leurs points de terminaison 120.

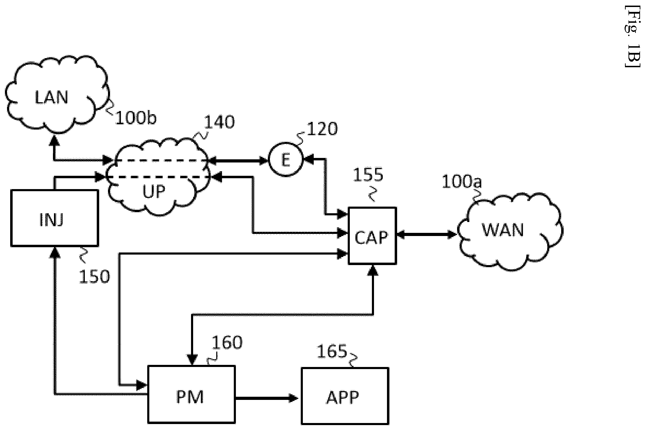

La Fig. 1B présente ainsi une architecture modulaire de sonde réseau, dans un mode de réalisation particulier, comportant un gestionnaire de sonde réseau 160, un injecteur 150, un module applicatif 165, et un module de capture 155.

Le module de capture 155 inclut un module de récupération permettant de récupérer, via un module d'interface du routeur auquel ladite sonde réseau est associée, des paquets de données relatifs à des tunnels de communication. Ainsi, le module de récupération permet par exemple d'obtenir une copie de tout paquet de données de type GRE, mGRE ou IPSec destiné ou émanant du point de terminaison 120 auquel ladite sonde réseau est associée. De plus, le module de récupération permet d'obtenir une copie de tout paquet fanion (tel que décrit ci-après) inclus dans le trafic du tunnel de communication supervisé par la sonde réseau en question. Le module de capture 155 inclut préférentiellement deux sous-modules : un sous-module de capture du trafic entrant dans le tunnel de communication et un sous-module de capture de trafic sortant du tunnel de communication, le tunnel de communication étant bidirectionnel. On peut ainsi voir le module de capture 155 comme deux points de capture spécialisés par point de terminaison 120.

L'injecteur 150 est adapté et configuré pour injecter des paquets fanions en parallèle du trafic du tunnel de communication supervisé (trafic sortant), c'est-à-dire lorsque la sonde réseau en question est associée au point de terminaison 120 en entrée du tunnel de communication. Les paquets fanions ne sont donc pas encapsulés dans le protocole du tunnel de communication, mais suivent le même chemin. En effet, si le protocole du tunnel de communication emploie un chiffrement des données, les paquets fanions ne pourraient alors pas être détectés en réception. La sonde réseau est configurée et adaptée de sorte que l'injecteur réseau 150 injecte les paquets fanions dans un plan utilisateur (« user plane » en anglais) 140 en amont du point de terminaison 120 par rapport au tunnel de communication supervisé, mais sans que les paquets fanions ne transitent par le tunnel de communication en question. Le plan utilisateur 140 est le chemin de données dans le routeur 110 auquel ladite sonde réseau est associée et par lequel transitent les paquets issus du réseau de communication 100b qui sont transmis dans le tunnel de communication en question par le point de terminaison 120 local. En variante, lorsque le tunnel de communication n'emploie pas de chiffrement, les paquets fanions peuvent faire partie du trafic transitant dans le tunnel de communication et être vus par le point de terminaison 120 local comme étant issus du réseau de communication 100b en amont du point de terminaison 120 local par rapport au tunnel de communication supervisé. Dans une autre variante où le trafic dans le tunnel de communication peut être chiffré, l'injecteur 150 injecte les paquets fanions entre le point de terminaison 120 en entrée du tunnel de communication et le point de capture local de la sonde réseau considérée. Dans tous les cas de figure évoqués ci-dessus, cela implique que les paquets fanions sont perceptibles et détectables par le point de capture local de la sonde réseau considérée.

Il convient de noter qu'une partie du contenu des paquets fanions, non nécessaire à leur routage, peut être chiffrée entre les sondes réseau impliquées. Cependant, le chiffrement appliqué est maîtrisé par les sondes réseau en question et est indépendant du chiffrement utilisé par le tunnel de communication auquel les paquets fanions en question sont associés.

L'injecteur 150 est configuré pour générer et émettre les paquets fanions à la demande, par exemple de façon périodique, selon une période de durée définie par le gestionnaire de sonde réseau 160 ou par pré-configuration. La cadence des paquets fanions injectés peut être modifiée ou ajustée par le gestionnaire de sonde réseau 160 dans le temps.

Dans un mode de réalisation particulier, les paquets fanions sont des paquets UDP (« User Datagram Protocol » en anglais) émis sur un port dédié auxdits paquets fanions. Préférentiellement, de tels paquets fanions sont injectés pour chaque type de service transporté par le tunnel de communication supervisé. Par exemple, des paquets fanions sont injectés par l'injecteur 150 pour chaque valeur de champ DSCP (« Differentiated Services Code Point » en anglais) des paquets du tunnel de communication.

Chaque paquet fanion inclut un identifiant de séquence (Seq). Chaque paquet fanion est ainsi numéroté.

Dans un mode de réalisation particulier, chaque paquet fanion inclut en outre une information d'horodatage (« timestamp » en anglais) exprimant une référence temporelle d'injection dudit paquet fanion. Cela permet, en analysant conjointement des instants de capture des paquets fanions à l'autre bout du tunnel de communication, d'évaluer des situations de congestion.

L'injecteur 150 est en outre adapté et configuré pour injecter un trafic de bourrage en complément du trafic du tunnel de communication supervisé (trafic sortant), c'est-à-dire lorsque la sonde réseau en question est associée au point de terminaison 120 en entrée du tunnel de communication. L'injection du trafic de bourrage dans le tunnel de communication est temporaire et permet de forcer temporairement une création de situation de congestion, qui va permettre grâce à une analyse des paquets fanions susmentionnés d'effectuer une évaluation de bande passante effectivement disponible.

Dans un mode de réalisation particulier, le trafic de bourrage est constitué de paquets successifs espacés d'une période de temps fixe potentiellement paramétrable.

Dans un mode de réalisation particulier, les paquets du trafic de bourrage sont des paquets de type UDP émis sur un port dédié audit trafic de bourrage. Ainsi, les paquets du trafic de bourrage peuvent être aisément capturés et distingués des autres paquets par les sondes réseau.

Dans un mode de réalisation particulier, le trafic de bourrage a une valeur de type de service (e.g., valeur de champ DSCP) dédiée, de basse priorité, de sorte que le trafic de bourrage est prioritairement impacté lorsque des pertes de paquets surviennent en situations de congestion. A noter que, dans ce cas, une injection de paquets fanions spécifiquement pour ce trafic de bourrage est réalisée par l'injecteur 150.

Dans un mode de réalisation particulier, la valeur de type de service (e.g., valeur de champ DSCP) dédiée au trafic de bourrage a la priorité la plus faible parmi lesdits types de service transportés par le tunnel de communication.

Dans un mode de réalisation particulier, pendant une période où l'injection du trafic de bourrage est activée, l'injection du tout premier paquet du trafic de bourrage est synchronisée avec l'injection d'un paquet fanion du même type de service (e.g., valeur de champ DSCP) que celui du trafic de bourrage. Ainsi, l'estimation de bande passante réalisée ensuite est plus précise.

Dans un mode de réalisation particulier, l'injection temporaire du trafic de bourrage est déclenchée sur réception d'une requête de déclenchement émanant d'un opérateur ou de l'orchestrateur 180, par exemple par le biais du module applicatif 165. La requête de déclenchement peut comprendre des paramètres de durée, de débit, et de type de service (e.g., valeur de champ DSCP), la taille de paquets à appliquer au trafic de bourrage.

En variante, l'injection temporaire du trafic de bourrage est déclenchée périodiquement. La période de déclenchement, la durée d'injection, le débit d'injection, le type de service (e.g., valeur de champ DSCP) dédié au trafic de bourrage, la taille de paquets du trafic de bourrage peuvent être préalablement configurés par un opérateur, par exemple par le biais du module applicatif 165 et/ou du gestionnaire de sonde réseau 160.

Le gestionnaire de sonde réseau 160 est configuré et agencé pour stocker des métriques liées à des mesures effectuées grâce au module de capture 155, coordonner la mise en place et le déroulement de communications inter-sondes pour un tunnel de communication donné, et consolider les métriques stockées afin d'alimenter le module applicatif 165 en informations de surveillance de tunnel de communication.

Le gestionnaire de sonde réseau 160 implémente un protocole de communication inter-sondes, permettant ainsi à ladite sonde réseau de communiquer avec une ou plusieurs autres dites sondes réseau dans le cadre de la supervision d'un ou plusieurs dits tunnels de communication respectifs. Un port UDP dédié au protocole de communication inter-sondes est préférentiellement utilisé pour ce faire. Un tel protocole inter-sondes permet notamment un partage d'informations de mesures effectuées par lesdites sondes réseau ou des informations de calculs qui en découlent.

Dans un mode de réalisation particulier, chaque sonde réseau a une adresse (typiquement, une adresse IP), pour communiquer dans le ou les réseaux de communication 100a, qui est prédéfinie par rapport à l'adresse du point de terminaison 120 du tunnel de communication à laquelle ladite sonde réseau est associée. Cela permet de mettre automatiquement en communication les sondes réseau concernées lorsqu'un nouveau tunnel de communication est détecté (e.g., établi). Cela permet aussi de configurer automatiquement la détection des paquets transmis par l'injecteur 150, par la sonde réseau distante associée au point de terminaison 120 de l'autre côté du tunnel de communication surveillé. Ainsi, notamment les paquets fanions transmis sont aisément identifiés par la sonde réseau distante associée au point de terminaison 120 de l'autre côté du tunnel de communication surveillé. Et le même mécanisme s'applique pour la définition des adresses des autres sondes réseau du système de communication.

Plus précisément, l'adresse de la sonde réseau est déterminée en appliquant une fonction de translation bijective par rapport à l'adresse du point de terminaison 120 auquel ladite sonde réseau est associée : application d'une règle de conversion (« mapping » en anglais) prédéfinie à partir de l'adresse du point de terminaison 120 auquel ladite sonde réseau est associée, ou application d'un décalage (« offset » en anglais) prédéfini (positif ou négatif) par rapport à l'adresse du point de terminaison 120 auquel ladite sonde réseau est associée, ou ajout d'une unité à l'adresse du point de terminaison 120 auquel ladite sonde réseau est associée.

En variante de réalisation, les sondes réseau ont des adresses indépendantes des adresses des points de terminaison 120 du tunnel de communication. Eventuellement, les injecteurs 150 ont des adresses qui leur sont propres. Alors, à la découverte d'un tunnel de communication, la sonde réseau en question notifie son plan d'adressage à la sonde réseau distante.

Les messages échangés dans le cadre du protocole inter-sondes sont préférentiellement d'un type de trafic de plus haute priorité. Par exemple, les messages échangés dans le cadre du protocole inter-sondes ont une valeur de champ DSCP plus prioritaire que les paquets qui sont encapsulés dans les tunnels de communication supervisés (i.e., plus prioritaire que les paquets communications entre les réseaux de communication 100b). Dans un mode de réalisation particulier, les messages échangés dans le cadre du protocole inter-sondes ont une valeur de champ DSCP qui correspond à une priorité maximale possible. Cela permet de limiter l'impact des situations de congestions sur le transit desdits messages échangés dans le cadre du protocole inter-sondes et ainsi permettre une meilleure réactivité, au besoin, aux situations de congestion.

Le module applicatif 165 est en charge de collecter des informations d'horodatage d'instant de capture desdits paquets fanions et des mesures de volumétrie de données transmises dans le tunnel de communication entre les paquets fanions. Le module applicatif 165 est ainsi apte à effectuer des calculs sur lesdites mesures afin de déterminer des informations de bande passante disponible. Les mesures sont effectuées par une sonde réseau en aval du tunnel de communication, et les calculs peuvent être réalisés par le module applicatif 165 de cette même sonde réseau, ou par le module applicatif 165 de la sonde réseau en amont du tunnel de communication après avoir obtenu des informations représentatives desdites mesures auprès de la sonde réseau en aval du tunnel de communication, voire par l'orchestrateur 180 après avoir obtenu des informations représentatives desdites mesures auprès de la sonde réseau en aval du tunnel de communication.

Le module applicatif 165 peut aussi être en charge de collecter des informations relatives à une variation de cadencement de flux de données dans le tunnel de communication supervisé par ladite sonde réseau, la variation de cadencement étant mesurée grâce à une variation de différence entre des informations d'horodatage contenues dans les paquets fanions et des informations d'horodatage d'instant de capture desdits paquets fanions. Le module applicatif 165 est ainsi apte à effectuer des calculs sur lesdites mesures afin d'évaluer des situations de congestion.

Par exemple, le module applicatif 165 peut être en charge d'instruire le routeur local pour modifier des profils de transmission de données dans le ou les réseaux de communication 100a de sorte à prendre en compte des informations de bande passante réellement disponible, et éventuellement des informations de situation de congestion, qui seraient révélées par les calculs qui découlent des mesures effectuées.

En variante, le module applicatif 165 est en charge de remonter à l'orchestrateur 180 des informations relatives aux mesures effectuées ou aux calculs qui en découlent, l'orchestrateur 180 étant alors en charge d'effectuer l'admission de service adéquate.

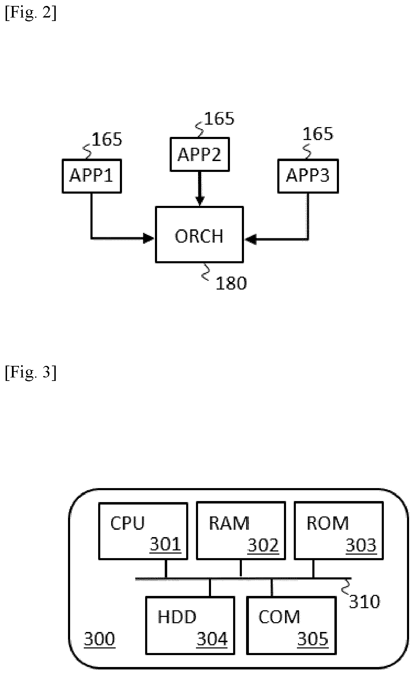

Ainsi, dans un mode de réalisation particulier tel qu'illustré sur la Fig. 2, les sondes réseau sont en communication avec un orchestrateur 180, plus particulièrement par le biais de leurs modules applicatifs 165. Les mesures effectuées par les sondes réseau ou des calculs qui en découlent peuvent ainsi être partagés avec l'orchestrateur 180, afin notamment de déterminer des informations de bande passante disponible dans le ou les réseaux de communication 100a et ainsi d'adapter des admissions de service en conséquence. Ainsi, le système de communication est particulièrement adapté aux infrastructures de type SD-WAN (« Software-Defined Wide Area Network » en anglais). Dans un mode de réalisation particulier, l'orchestrateur 180 définit et impose (« enforce » en anglais) une politique d'admission de services dans le ou les réseaux de communication 100a qui tient compte des capacités effectives de communication dans ledit ou lesdits réseaux de communication 100a et qui prend donc en compte les informations de bande passante disponible qui ont été ainsi déterminées.

La Fig. 3 illustre schématiquement un exemple d'architecture matérielle de sonde réseau, permettant notamment d'implémenter l'architecture modulaire de la Fig. 1B.

La sonde réseau comprend alors, reliés par un bus de communication 310 : un processeur ou CPU (pour « Central Processing Unit » en anglais) 301, ou une grappe de tels processeurs, comme par exemple des GPU (« Graphics Processing Units » en anglais) ; une mémoire vive RAM (pour « Random Access Memory » en anglais) 302 ; une mémoire morte ROM (pour « Read Only Memory » en anglais) 303, ou une mémoire réinscriptible de type EEPROM (« Electrically Erasable Programmable ROM » en anglais), par exemple de type Flash ; un dispositif de stockage de données, tel qu'un disque dur HDD (pour « Hard Disk Drive » en anglais) 304, ou un lecteur de support de stockage, tel qu'un lecteur de cartes SD (pour « Secure Digital » en anglais) ; un ensemble d'interfaces d'entrées et/ou sorties, telles que des interfaces de communication 305, permettant notamment à la sonde réseau de capter des paquets à destination du routeur auquel la sonde réseau est associée, ou en transit via le routeur auquel la sonde réseau est associée, d'injecter et de capter des paquets, notamment des paquets fanions et du trafic de bourrage, comme décrit plus en détails ci-après, ainsi que de communiquer avec d'autres sondes réseau du système de communication ou avec l'orchestrateur 180.

Le processeur 301 est capable d'exécuter des instructions chargées dans la RAM 302 à partir de la ROM 303, d'une mémoire externe (non représentée), d'un support de stockage, tel qu'une carte SD ou le disque dur HDD, ou d'un réseau de communication. Lorsque la sonde réseau est mise sous tension, le processeur 301 est capable de lire de la RAM 302 des instructions et de les exécuter. Ces instructions forment un programme d'ordinateur causant l'implémentation, par le processeur 301, des étapes, comportements et algorithmes décrits ici.

Tout ou partie des étapes, comportements et algorithmes décrit ici peut ainsi être implémenté sous forme logicielle par exécution d'un ensemble d'instructions par une machine programmable, telle qu'un DSP (« Digital Signal Processor » en anglais) ou un processeur, ou être implémenté sous forme matérielle par une machine ou un composant (« chip » en anglais) dédié ou un ensemble de composants dédié (« chipset » en anglais), tel qu'un FPGA (pour « Field-Programmable Gate Array » en anglais) ou un ASIC (pour « Application-Specific Integrated Circuit » en anglais).

Il en découle que l'architecture modulaire de la Fig. 1B peut être implémentée sous forme logicielle par exécution d'un ensemble d'instructions par une machine programmable, ou être implémenté sous forme matérielle par une machine ou un composant dédié ou un ensemble de composants dédiés.

D'une manière générale, chaque sonde réseau comprend de la circuiterie électronique agencée et configurée pour implémenter les étapes, comportements et algorithmes décrits ici, et notamment l'architecture modulaire de la Fig. 1B.

A noter que l'orchestrateur 180 peut aussi comprendre de manière analogue de la circuiterie électronique agencée et configurée pour implémenter les étapes et comportements décrits ici en relation avec ledit orchestrateur 180, et notamment des étapes de calcul de bande passante disponible, voire d'évaluation de situations de congestion, à partir de mesures effectuées par lesdites sondes réseau.

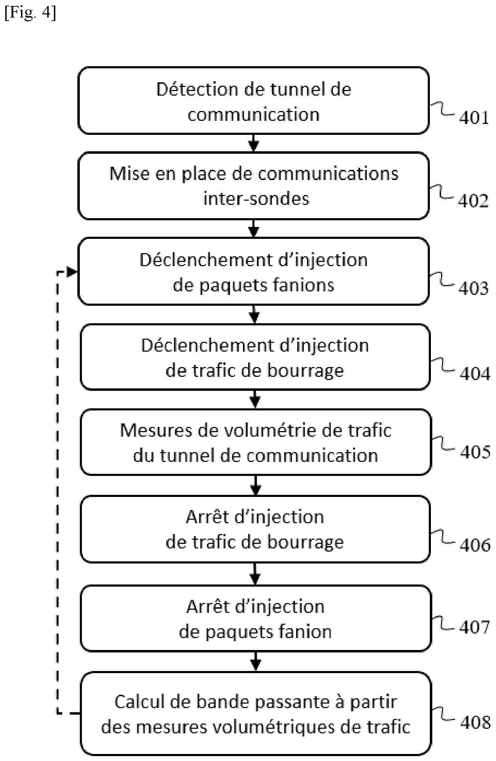

La Fig. 4 illustre schématiquement un organigramme de détermination de bande passante d'un tunnel de communication dont les points de terminaison 120 sont surveillés par des sondes réseau respectives.

Dans une étape 401, chaque sonde réseau susmentionnée détecte le tunnel de communication (par exemple, un tunnel de communication nouvellement créé). La détection d'un tunnel de communication est préférentiellement réalisée par détection de la transmission d'un paquet d'encapsulation de tunnel, par exemple de type GRE, mGRE ou IPSec, Le tunnel de communication est identifié par une adresse source et une adresse destination qui forment le couple de points de terminaison 120 du tunnel de communication, pour le sens de communication considéré.

Dans une étape 402, les sondes réseau de part et d'autre du tunnel de communication mettent en place le protocole de communication inter-sondes, comme déjà évoqué. Les sondes réseau sont ainsi aptes à communiquer entre elles et/ou avec l'orchestrateur 180, afin de coopérer pour la détermination de bande passante disponible pour le tunnel de communication.

Préférentiellement, chaque sonde réseau ouvre un connecteur réseau (« socket » en anglais) avec son adresse (IP) et un port UDP dédié. Cela permet à chaque sonde réseau de recevoir des messages UDP qui sont adressés, par toute autre sonde réseau du système de communication (ou par l'orchestrateur 180), à destination de cette adresse et de ce port UDP dédié. Comme déjà évoqué, d'autres approches de partage de plan d'adressage peuvent être implémentées.

Dans une étape 403, une première sonde réseau, côté amont du tunnel de communication par rapport au sens de communication pour lequel la bande passante doit être déterminée, instancie un injecteur configuré pour injecter des paquets fanions ainsi que du trafic de bourrage. Les paquets fanions définissent ainsi une horloge de référence dans le sens de communication pour lequel la bande passante disponible doit être déterminée.

Préférentiellement, chaque sonde réseau de part et d'autre du tunnel de communication instancie un tel injecteur. Ainsi, une horloge de référence est établie dans les deux sens de communication entre les sondes réseau via le tunnel de communication, ce qui permet de déterminer la bande passante dans chaque sens de communication, ce qui est notamment avantageux dans le cas d'un lien de communication asymétrique.

Puis, lorsque l'injecteur de la première sonde réseau est instancié, dans cette étape 403, la première sonde réseau déclenche l'injection de paquets fanions par ledit injecteur, y compris pour le type de service (e.g., valeur de champ DSCP) destiné au trafic de bourrage, comme déjà évoqué ci-dessus.

Et, dans une étape 404, la première sonde réseau déclenche l'injection de trafic de bourrage, comme déjà évoqué ci-dessus.

Puis, dans une étape 405, la seconde sonde réseau, à l'autre bout du tunnel de communication, c'est-à-dire côté aval par rapport au sens de communication pour lequel la bande passante doit être déterminée, effectue des captures et des mesures de volumétrie de données pour le tunnel de communication en question. Les mesures de volumétrie de données sont réalisées par comptage de volume de données transmises entre des dits paquets fanions successifs, détectés dans le trafic sortant du tunnel de communication.

Les mesures de volumétrie de données sont préférentiellement réalisées par type de service dans le tunnel de communication, par exemple en s'appuyant sur une information de type de service (e.g., valeur de champ DSCP) incluse dans les paquets d'encapsulation du tunnel de communication, ainsi que dans les paquets fanions associés à ce même type de service.

Comme détaillé par la suite, les paquets fanions servent de référence d'horloge pour effectuer les mesures de volumétrie et ainsi déterminer la bande passante disponible pour le tunnel de communication.

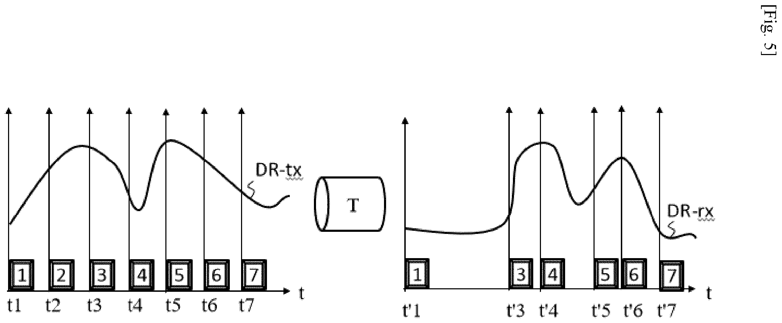

Les paquets fanions peuvent en outre servir de référence d'horloge pour déterminer des variations de cadencement entre l'entrée et la sortie du tunnel de communication, comme schématiquement illustré sur la Fig. 5 et ainsi évaluer des situations de congestion (typiquement, autres que celles volontairement créées grâce au trafic de bourrage).

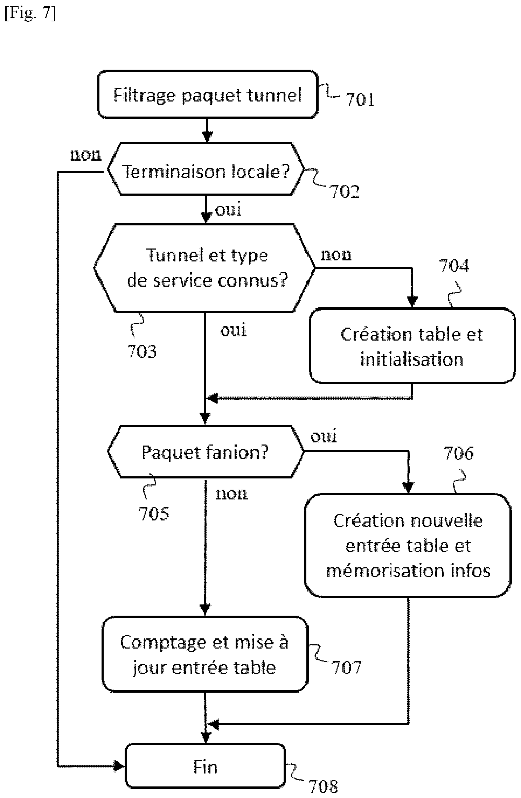

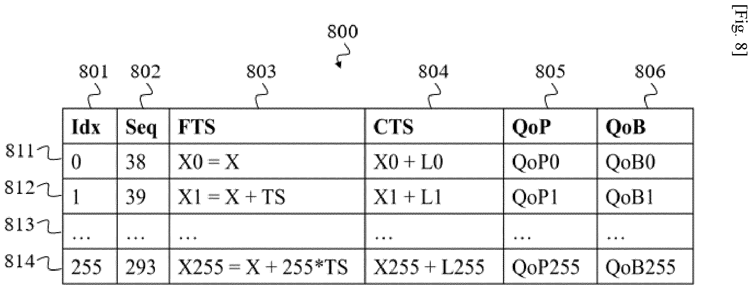

Dans un mode de réalisation particulier, les mesures de volumétrie de données transmises dans le tunnel de communication entre des paquets fanions détectés successivement en sortie du tunnel de communication sont stockées dans une table de mesures, comme détaillé ci-après en relation avec les Figs. 7 et 8.

Dans une étape 406, lorsque la période pendant laquelle l'insertion du trafic de bourrage est jugée suffisante pour réaliser une estimation de bande passante, la sonde réseau en amont du tunnel de communication arrête l'injection du trafic de bourrage.

Puis, dans une étape 407, la sonde réseau en amont du tunnel de communication arrête l'injection des paquets fanions. L'injection des paquets fanions peut toutefois être maintenue largement au-delà de l'injection du trafic de bourrage (par exemple, en permanence) afin de permettre de détecter des situations de congestion qui surviendraient malgré l'absence de trafic de bourrage. En effet, si le cadencement en sortie du tunnel de communication diffère du cadencement en entrée du tunnel de communication au-delà d'une marge prédéterminée, une situation de congestion est détectée, comme détaillé ci-dessous en relation avec la Fig. 5. Un ajustement d'admission de service peut être réalisé en conséquence.

Dans une étape 408, une des sondes réseau de part et d'autre du tunnel de communication, ou l'orchestrateur 180, effectue un calcul de bande passante à partir des mesures de volumétrie réalisées à l'étape 405. La bande passante disponible pour le tunnel de communication est la bande passante consommée pendant la période de test. Ainsi, d'après ce calcul, la bande passante correspond au volume V de données transmises dans le tunnel de communication sur une période, délimitée par des premier et second paquets fanions reçus en sortie du tunnel de communication, pendant laquelle le trafic de bourrage a été injecté. En d'autres termes, la bande passante est donnée par ce volume V divisé par l'écart temporel entre l'instant de capture dudit premier paquet fanion et l'instant de capture dudit second paquet fanion, en sortie du tunnel de communication.

Dans un mode de réalisation particulier, lorsque le tunnel de communication transporte des sous-flux de données ayant des types de service distincts, la bande passante disponible BDW pour le tunnel de communication est calculée comme étant la somme des bandes passantes consommées individuellement par les sous-flux en question, soit :

$$BDW = \sum_i (V_i/\Delta t_i)$$

où :

- *i* représente un index sur les sous-flux (ou types de service) ;
- $V_i$ est le volume de données transmises pour le sous-flux identifié par la valeur d'index *i* pendant la période de temps $\Delta t_i$ ; et
- $\Delta t_i$ est la durée de la période de test pour le sous-flux identifié par la valeur d'index *i*.

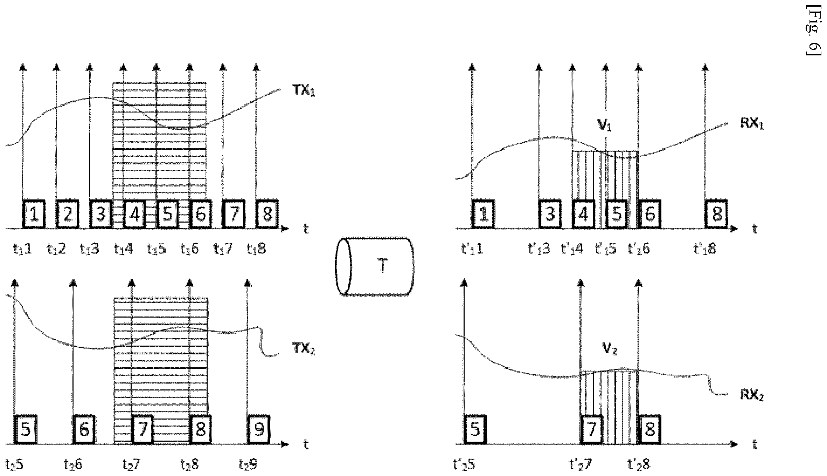

Un exemple illustratif est présenté ci-après en relation avec la Fig. 6.

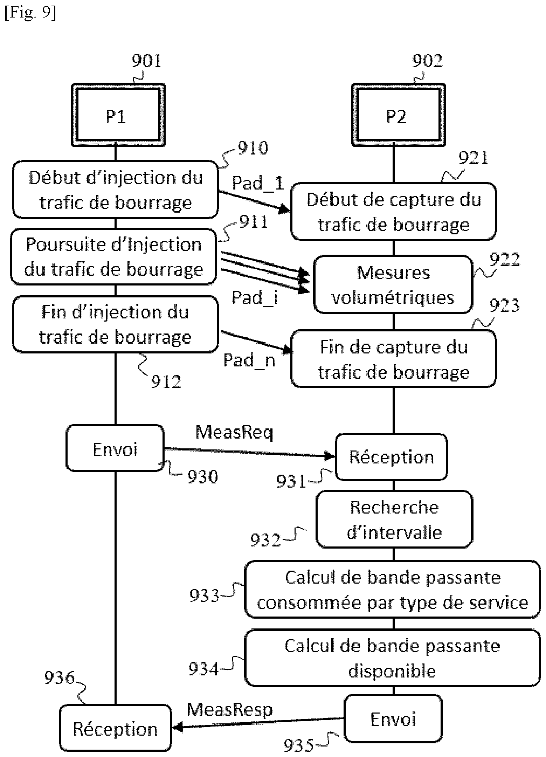

Par ailleurs, un mode de réalisation particulier de coopération entre sondes réseau afin de réaliser le calcul de bande passante est présenté ci-après en relation avec la Fig. 9.

La Fig. 5 illustre schématiquement une variation de cadencement d'un flux de données dans un tunnel de communication T.

En entrée du tunnel de communication T, les données sont transmises (par exemple pour un type de service donné) selon un débit DR-tx. L'injecteur 150 de la première sonde réseau transmet, à période constante, des paquets fanions 1 à 7 dans le flux de données entrant dans le tunnel de communication. Les paquets fanions 1 à 7 sont donc transmis par le point de terminaison 120 en entrée du tunnel de communication à des instants respectifs t1 à t7 séparés par une période fixe configurée Ts. La période Ts peut être définie en fonction d'une bande passante et d'une latence attendue (e.g., théorique) dans le réseau de communication 100a via lequel est établi le tunnel de communication T.

En sortie du tunnel de communication T, les données sont reçues (par exemple pour un type de service donné) selon un débit DR-rx qui diffère typiquement du débit DR-tx en entrée du tunnel de communication T. Les paquets fanions 1 et 3 à 7 sont donc reçus par le point de terminaison 120 en sortie du tunnel de communication à des instants respectifs t'1 et t'3 à t'7 qui ne sont pas séparés par la période fixe Ts, et sur la Fig. 5, le paquet 2 a été perdu en route. Le flux de données a donc subi une variation de cadencement dans le tunnel de communication T supervisé.

Grâce à l'information d'horodatage contenue dans les paquets fanions, la seconde sonde réseau (i.e., en sortie du tunnel de communication T) est toutefois en mesure de déterminer le cadencement en entrée du tunnel de communication T. En déterminant un horodatage des paquets fanions reçus en sortie du tunnel de communication (récupération d'une information représentative de l'instant de réception), la seconde sonde réseau est en mesure de déterminer le cadencement en sortie du tunnel de communication.

En comparant le cadencement en entrée du tunnel de communication T et le cadencement en sortie du tunnel de communication T, la variation de cadencement dans le tunnel de communication T supervisé peut être déterminée. Des situations de congestion peuvent ainsi être détectées, lorsque la différence de cadencement est supérieure à un seuil de marge prédéterminé. De telles situations de congestion peut être forcées, grâce au trafic de bourrage, afin de déterminer la bande passante disponible pour le tunnel de communication. Ainsi, dans le cadre de l'invention, les paquets fanions sont surtout utilisés comme repères pour identifier une période de test pendant laquelle le trafic de bourrage est injecté, afin de permettre la détermination de bande passante sur cette période de test. Une illustration est donnée sur la Fig. 6.

La **Fig. 6** illustre schématiquement une variation de cadencement d'un flux de données dans un tunnel de communication T pour deux types de service en parallèle, avec insertion d'un trafic de bourrage.

En entrée du tunnel de communication T, des paquets sont transmis pour un premier type de service (e.g., première valeur de champ DSCP), selon un débit $TX_1$, pour un premier sous-flux du tunnel de communication T. L'injecteur de la première sonde réseau transmet ainsi, selon une période fixe $T_1$, des paquets fanions 1 à 8 pour le premier type de service. En parallèle, des paquets sont transmis pour un deuxième type de service (e.g., deuxième valeur de champ DSCP), selon un débit $TX_2$, pour un deuxième sous-flux du tunnel de communication T. L'injecteur de la première sonde réseau transmet ainsi, selon une période fixe $T_2$, des paquets fanions 5 à 9 pour le deuxième type de service.

Les paquets fanions 1 à 8 relatifs au premier sous-flux du tunnel de communication T sont donc transmis par le point de terminaison 120 en entrée du tunnel de communication T à des instants respectifs $t_1 1$ à $t_1 8$

séparés par une période fixe $T_1$. La période fixe $T_1$ peut être configurable. Et les paquets fanions 5 à 9 relatifs au deuxième sous-flux du tunnel de communication T sont transmis par le point de terminaison 120 en entrée du tunnel de communication T à des instants respectifs $t_2 1$ à $t_2 8$ séparés par une période fixe $T_2$. La période fixe $T_1$ peut, elle aussi, être configurable.

En sortie du tunnel de communication T, les paquets du premier sous-flux du tunnel de communication T sont reçus selon un débit $RX_1$ qui diffère typiquement du débit $TX_1$ en entrée du tunnel de communication T. Les paquets fanions 1, 3, 4, 5, 6 et 8 relatifs au premier sous-flux du tunnel de communication T sont alors reçus par le point de terminaison 120 en sortie du tunnel de communication à des instants respectifs $t'_1 1$, $t'_1 3$, $t'_1 4$, $t'_1 5$, $t'_1 6$ et $t'_1 8$. Les paquets fanions 2 et 7 relatifs au premier sous-flux du tunnel de communication T (*i.e.*, pour le premier type de service) ont été perdus pendant la transmission dans le tunnel de communication T.

En parallèle, en sortie du tunnel de communication T, les paquets du deuxième sous-flux du tunnel de communication T sont selon un débit $RX_2$ qui diffère typiquement du débit $TX_2$ en entrée du tunnel de communication T. Les paquets fanions 5, 7 et 8 relatifs au deuxième sous-flux du tunnel de communication T sont reçus par le point de terminaison 120 en sortie du tunnel de communication à des instants respectifs $t'_2 5$, $t'_2 7$ et $t'_2 8$. Les paquets fanions 6 et 9 relatifs au deuxième sous-flux du tunnel de communication T (*i.e.*, pour le deuxième type de service) ont été perdus pendant la transmission dans le tunnel de communication T.

Il apparaît sur la Fig. 6 que les sous-flux du tunnel de communication T subissent des variations de cadencement différentes l'un de l'autre, du fait que les types de service associés sont différents.

Des séries de paquets fanions peuvent être utilisées pour chaque type de service. Auquel cas, comme illustré sur la Fig. 6, les paquets fanions n'ont pas à être synchronisés d'un sous-flux à un autre.

Outre les paquets fanions, la Fig. 6 montre de manière illustrative l'insertion du trafic de bourrage, en hachures horizontales en entrée du tunnel de communication T.

En identifiant le numéro de séquence (Seq) du tout premier paquet fanion injecté pendant la période de test (période d'injection du trafic de bourrage), et le numéro de séquence (Seq) du tout dernier paquet fanion injecté pendant la période de test, la seconde sonde réseau, en sortie du tunnel de communication T, est en mesure de déterminer des bornes qui doivent être effectivement considérées dans le flux de données du tunnel de communication T pour réaliser le calcul de bande passante. En cas de différents sous-flux avec des séries de paquets fanions dédiées à chaque sous-flux (et donc à chaque type de service), ces bornes doivent être déterminées indépendamment pour chaque type de service. Dans l'exemple de la Fig. 6, la portion de sous-flux entre le paquet fanion 4 et le paquet fanion 6 est examinée pour le premier sous-flux du tunnel de communication T, et la portion de sous-flux entre le paquet fanion 7 et le paquet fanion 8 est examinée pour le deuxième sous-flux du tunnel de communication T. La volumétrie entre ces paquets fanions par type de service est alors déterminée en conséquence pour déterminer la bande passante consommée par chaque sous-flux. Alors, la bande passante disponible pour le tunnel de communication T est égale à la somme de la bande passante consommée par chaque sous-flux.

Ainsi, la Fig. 6 illustre en sortie du tunnel de communication T, par des hachures verticales, que seul le volume de données $V_1$ (volume moyen de données) pour le premier type de service est considéré entre les paquets fanions 4 et 6 pour le calcul de bande passante, et que seul le volume de données $V_2$ (volume moyen de données) pour le deuxième type de service est considéré entre les paquets fanions 7 et 8 pour le calcul de bande passante.

La **Fig. 7** illustre schématiquement un organigramme de création et de mise à jour d'une table de mesures stockant des informations représentatives de mesures volumétriques d'un trafic de données dans un tunnel de communication, selon un cadencement défini par des paquets fanions. L'organigramme de la Fig. 7 est exécuté par la sonde réseau en aval du tunnel de communication.

Dans une étape 701, la sonde réseau en question obtient un paquet de données du tunnel de communication, tel que récupéré par le module de capture 165 sur l'ensemble des paquets de données transitant (émission / réception) via le point de terminaison 120 auquel ladite sonde réseau est associée.

Dans une étape 702, la sonde réseau détermine si le paquet de données concerne le point de terminaison 120 auquel ladite sonde réseau est associée. Si tel n'est pas le cas, il est mis fin à l'algorithme dans une étape 708 ; sinon, une étape 703 est effectuée. Dans le cas d'un rôle de sonde réseau amont par rapport au tunnel de communication, l'adresse source pointe sur le point de terminaison 120 auquel ladite sonde réseau est associée. Dans le cas d'un rôle de sonde réseau aval par rapport au tunnel de communication, l'adresse destination pointe sur le point de terminaison 120 auquel ladite sonde réseau est associée.

Dans l'étape 703, la sonde réseau détermine si le paquet de données en question est issu d'un tunnel de communication déjà connu de ladite sonde réseau. Préférentiellement, les mesures étant effectuées par type de service, la sonde réseau détermine auquel cas, en outre, si le type de service est déjà connu pour le tunnel de communication. Le tunnel de communication est déjà connu si l'adresse source et l'adresse destination du paquet de données en question forment un couple de points de terminaison 120 identifiés en mémoire de la sonde réseau. Si les conditions ci-dessus sont vérifiées, une étape 705 est effectuée ; sinon, une étape 704 est effectuée.

Dans l'étape 704, la sonde réseau crée une table de mesures pour le tunnel de communication nouvellement détecté et/ou une table pour le type de service nouvellement détecté. La sonde réseau initialise chaque table de mesures ainsi créée.

Par exemple, chaque table de mesures est adaptée pour inclure 256 échantillons. Lorsque la table de mesures en question devient pleine, la sonde réseau écrase l'échantillon le plus ancien lorsque ladite sonde réseau doit stocker un nouvel échantillon dans ladite table de mesures.

Dit autrement, la sonde réseau instancie en mémoire (dans une base de données, par exemple) un descripteur, pour le tunnel de communication nouvellement détecté et/ou le type de service nouvellement détecté, permettant de stocker ultérieurement des captures et des métriques relatives à des mesures de trafic de données dudit tunnel de communication.

Puis, l'étape 705 est effectuée.

Dans l'étape 705, la sonde réseau détermine si le paquet de données en question est un paquet fanion. Si tel est le cas, une étape 706 est effectuée ; sinon, une étape 707 est effectuée.

Dans l'étape 706, la sonde réseau crée une nouvelle entrée dans la table de mesures qui correspond au tunnel de communication, et éventuellement au type de service auquel le paquet fanion correspond. Chaque entrée de table correspond à un échantillon.

La table de mesures est telle que chaque entrée de table inclut :

- un champ d'information d'horodatage marquant l'instant auquel le paquet fanion, qui a entraîné la création de l'entrée dans la table de mesures, a été reçu (horodatage de capture) ;
- un champ de numéro de séquence tel que contenu dans le paquet fanion qui a entraîné la création de l'entrée dans la table de mesures ;
- un champ de comptage de données transitant dans le tunnel de communication, pour le sens de communication considéré (pour le type de service auquel le paquet fanion correspond, si applicable).

Dans un mode de réalisation particulier, comme déjà évoqué, les paquets fanions incluent une information d'horodatage exprimant une référence temporelle d'injection dudit paquet fanion. Alors, chaque entrée de table inclut en outre :
- un champ d'information d'horodatage telle que contenue dans le paquet fanion qui a entraîné la création de l'entrée dans la table de mesures.

Un exemple de structure de table de mesures, pour un tunnel de communication considéré et préférentiellement un type de service (e.g., DSCP) considéré dans ledit tunnel de communication, est schématiquement illustré sur la Fig. 8. La structure de table de mesures illustrée sur la Fig. 8 comporte six colonnes, référencées de 801 à 806.

Pour chaque échantillon, la colonne 801 contient une valeur d'index Idx d'échantillon dans la table de mesures. Ici, les valeurs d'index Idx sont présentées dans la colonne 801 par valeurs croissantes, de 0 à 255. Les valeurs d'index Idx sont représentatives de l'ordre dans lequel les paquets fanions traités dans ladite table de mesures ont été capturés (de manière rotative, c'est-à-dire que lorsque l'entrée de valeur d'index Idx égale à 255 est remplie, l'entrée suivante à manipuler est celle de valeur d'index Idx égale à 0).

Pour chaque échantillon, la colonne 802 contient un numéro de séquence Seq tel que contenu dans le paquet fanion qui a entraîné la création, dans la table de mesures, de l'entrée correspondant à la valeur d'index Idx en question.

Pour chaque échantillon, la colonne 803 contient une information d'horodatage FTS telle que contenue dans le paquet fanion qui a entraîné la création, dans la table de mesures, de l'entrée correspondant à la valeur d'index Idx en question.

Pour chaque échantillon, la colonne 804 contient une information d'horodatage CTS marquant l'instant auquel le paquet fanion, qui a entraîné la création de l'entrée dans la table de mesures, de l'entrée correspondant à la valeur d'index Idx en question a été capturé.

Pour chaque échantillon, la colonne 805 contient une information QoP de quantité de paquets transitant dans le tunnel de communication, pour le sens de communication considéré (pour le type de service auquel le paquet fanion correspond, si applicable). L'information QoP indique la quantité de paquets capturés entre le paquet fanion, qui a entraîné la création dans la table de mesures, de l'entrée correspondant à la valeur d'index Idx en question et le prochain fanion qui a entraîné la création dans la table de mesures, de l'entrée correspondant à la valeur d'index Idx suivante, pour le sens de communication considéré (pour le type de service auquel le paquet fanion correspond, si applicable).

Pour chaque échantillon, la colonne 806 contient une information QoB de quantité d'octets transitant dans le tunnel de communication, pour le sens de communication considéré (pour le type de service auquel le paquet fanion correspond, si applicable). L'information QoB indique la quantité d'octets capturés entre le paquet fanion, qui a entraîné la création dans la table de mesures, de l'entrée correspondant à la valeur d'index Idx en question et le prochain fanion qui a entraîné la création dans la table de mesures, de l'entrée correspondant à la valeur d'index Idx suivante, pour le sens de communication considéré (pour le type de service auquel le paquet fanion correspond, si applicable).

Dans la Fig. 8, un échantillon est stocké sur chaque ligne de la table de mesures.

Une ligne 811 stocke un échantillon, à la valeur d'index Idx égale à 0, dont :

- le numéro de séquence Seq est égal à 38 ;
- l'information d'horodatage contenue dans le paquet fanion correspondant a une valeur X0 qui est égale à X, où X est un instant de référence ;
- l'information d'horodatage de capture du paquet fanion correspondant a une valeur X'0 qui est égale à X0+L0, où L0 est une durée de latence de capture par rapport à l'instant X0 où le paquet fanion en question a été émis.

Une ligne 812 stocke un échantillon, à la valeur d'index Idx égale à 1, dont :

- le numéro de séquence Seq est égal à 39 ;
- l'information d'horodatage contenue dans le paquet fanion correspondant a une valeur X1 qui est égale à X+TS, où TS est une valeur prédéfinie fixe de période de cadencement des paquets fanions ;
- l'information d'horodatage de capture du paquet fanion correspondant a une valeur X'1 qui est égale à X1+L1, où L1 est une durée de latence de capture par rapport à l'instant X1 où le paquet fanion en question a été émis.

Une ligne 814 stocke un échantillon, à la valeur d'index Idx égale à 255, dont :

- le numéro de séquence Seq est égal à 293 ;
- l'information d'horodatage contenue dans le paquet fanion correspondant a une valeur X255 qui est égale à X+255*TS ;
- l'information d'horodatage de capture du paquet fanion correspondant a une valeur X'255 qui est égale à X255+L255, où L255 est une durée de latence de capture par rapport à l'instant X255 où le paquet fanion en question a été émis.

Lors des opérations de comptage, les colonnes 805 et 806 sont mises à jour pour indiquer respectivement les quantités de paquets capturés et les quantités d'octets capturés entre des paquets fanions capturés successivement. Ainsi, après remplissage : la ligne 811 contient dans la colonne 805 une mesure de comptage de paquets QoP0, et dans la colonne 806 une mesure de comptage d'octets QoB0 ; la ligne 812 contient dans la colonne 805 une mesure de comptage de paquets QoP1, et dans la colonne 806 une mesure de comptage d'octets QoB1 ; et la ligne 814 contient dans la colonne 805 une mesure de comptage de paquets QoP255, et dans la colonne 806 une mesure de comptage d'octets QoB255.

L'exemple de table de mesures de la Fig. 8 contient d'autres lignes 813 contenant d'autres échantillons, entre la ligne 812 et la ligne 814, qui ne sont pas plus amplement détaillées dans cet exemple.

A noter que, comme il se peut que des paquets fanions soient perdus, il est possible que deux échantillons successifs dans la table de mesures aient des numéros de séquence qui ne se suivent pas. Cette situation survient plus particulièrement lorsqu'une congestion sur le chemin emprunté par le tunnel de communication a entraîné des pertes de paquets.

De retour à la Fig. 7, l'étape 708 est effectuée, où il est mis fin à l'algorithme.

Dans l'étape 707, la sonde réseau effectue un comptage des paquets transitant dans le tunnel de communication, pour le sens de communication considéré. Le paquet de données reçu est pris en compte dans l'échantillon en cours dans la table correspondante. Par exemple, un nombre de paquets reçus à la suite du paquet fanion qui a entraîné la création de l'entrée correspondante dans la table est incrémenté d'une unité. De plus, une quantité de données reçues à la suite du paquet fanion qui a entraîné la création de l'entrée correspondante dans la table est incrémentée de la taille du paquet de données en question. Il convient de noter qu'en procédant ainsi les paquets fanions ne sont pas pris en compte dans le comptage. Il est aussi possible de prendre en compte les paquets fanions dans le comptage ; dans ce cas, l'étape 706 est suivie de l'étape 707 et non de l'étape 708.

Puis, l'étape 708 est effectuée, où il est mis fin à l'algorithme.

En procédant ainsi, un historique des échantillonnages réalisés par la sonde réseau est stocké en mémoire.

Dans un mode de réalisation particulier, une des sondes réseau (typiquement la sonde réseau en amont du tunnel de communication, dans un sens de communication considéré) demande à l'autre sonde réseau de l'autre côté du tunnel de communication de lui transmettre en réponse des données d'historique d'échantillonnages ou des informations qui en sont dérivées par calculs (typiquement, cumul volumétrique entre deux paquets fanions identifiés, par type de service). Une requête MeasReq est transmise pour ce faire dans le cadre du protocole inter-sondes. La requête MeasReq comporte alors un champ indiquant un intervalle de numéros de séquence de paquets fanions pour lequel l'historique, ou lesdites informations qui en sont dérivées par calculs, doit être fourni en réponse. Un mode de réalisation particulier est présenté ci-après en relation avec la Fig. 9.

La **Fig. 9** illustre schématiquement une coopération entre des sondes réseau en amont (sonde réseau P1 901) et en aval (sonde réseau P2 902) d'un tunnel de communication pour déterminer une bande passante disponible pour le tunnel de communication.

Il est considéré ici que l'injection de paquets fanions a déjà été préalablement activée.

Et dans une étape 910, la sonde réseau P1 901 débute l'injection du trafic de bourrage. Un premier paquet de bourrage Pad_1 est ainsi transmis dans le tunnel de communication. Ce premier paquet de bourrage Pad_1, s'il n'est pas perdu lors de sa transmission dans le tunnel de communication, est détecté (capturé) en sortie du tunnel de communication par la sonde réseau P2 902 dans une étape 921.

L'injection du trafic de bourrage peut être déclenchée par la sonde réseau P1 901 en conséquence d'un événement prédéterminé, par exemple selon un déclenchement périodique pour évaluer périodiquement la bande passante disponible, ou par exemple sur détection de conditions de transmission particulières ou de variations de conditions de transmission particulières. En variante, l'injection du trafic de bourrage peut être déclenchée par instruction de l'orchestrateur 180 à la sonde réseau P1 901.

Ensuite, dans une étape 911, la sonde réseau P1 901 poursuit l'injection du trafic de bourrage entraînant la transmission dans le tunnel de communication de paquets de bourrage successifs Pad_i (i étant ici un index). Ces paquets de bourrage Pad_i, s'ils ne sont pas perdus lors de leur transmission dans le tunnel de communication, sont détectés (capturés) en sortie du tunnel de communication par la sonde réseau P2 902 dans une étape 922. La sonde réseau P2 902 effectue alors des mesures volumétriques, et enregistre dans une table de mesures le volume de données reçues entre des paquets fanions successivement reçus (voir Figs. 7 et 8).

Enfin, dans une étape 912, la sonde réseau P1 901 met fin à l'injection du trafic de bourrage. Le dernier paquet de bourrage, libellé Pad_n, est ainsi transmis dans le tunnel de communication. Ce dernier paquet de bourrage Pad_n, s'il n'est pas perdu lors de sa transmission dans le tunnel de communication, est détecté (capturé) en sortie du tunnel de communication par la sonde réseau P2 902 dans une étape 923. Il est mis fin à la capture du trafic de bourrage, et la table de mesures est mise à jour en conséquence par la sonde réseau P2 902.

L'injection du trafic de bourrage a été telle qu'une situation de congestion a été créée, de sorte que la bande passante consommée équivaut à la bande passante disponible. Les mesures volumétriques enregistrées dans la table de mesures par la sonde réseau P2 902, lorsque le trafic de bourrage était injecté dans le tunnel de communication, permettent alors de déterminer la bande passante disponible pour le tunnel de communication.

Alors, dans une étape 930, la sonde réseau P1 901 transmet une requête MeasReq à la sonde réseau P2 902. La requête MeasReq est reçue par la sonde P2 902 dans une étape 931.

L'envoi de la requête MeasReq peut être déclenchée par la sonde réseau P1 901 en conséquence de l'arrêt de l'injection du trafic de bourrage (arrêt de la période de test). En variante, l'envoi de la requête MeasReq peut être déclenché par instruction de l'orchestrateur 180 à la sonde réseau P1 901.

Et dans une étape 932, la sonde réseau P2 902 effectue une recherche d'intervalle temporel pertinent de données à extraire de son historique de mesures stocké dans sa table de mesures.

Préférentiellement, la requête MeasReq inclut une information indiquant un intervalle de séquence de paquets fanions pertinents pour le calcul de bande passante consommée.

Dans un mode de réalisation particulier, lorsque plusieurs sous-flux correspondant à différents types de service respectifs sont transportés dans le tunnel de communication, la requête MeasReq inclut une telle information indiquant un intervalle de séquence de paquets fanions pertinents pour chaque sous-flux en question.

Dans un mode de réalisation particulier, lorsque plusieurs sous-flux correspondant à différents types de service respectifs sont transportés dans le tunnel de communication et que le trafic de bourrage est associé à un type de service dédié, la requête MeasReq inclut une telle information d'intervalle de séquence uniquement pour ledit type de service dédié au trafic de bourrage. Les intervalles de séquence applicables pour les autres types de service en sont déduits par la sonde réseau P2 902. Les paquets fanions pertinents pour les autres types de service sont tels que les informations d'horodatage de capture de ces paquets fanions sont incluses dans l'intervalle temporel défini par les informations d'horodatage de capture des paquets fanions pertinents pour ledit type de service dédié au trafic de bourrage.

En variante de réalisation, lorsque le trafic de bourrage est associé à un type de service dédié, la sonde réseau P2 902 recherche par elle-même l'intervalle de séquence de paquets fanions pertinents pour le calcul de bande passante consommée, cet intervalle étant alors délimité par des paquets fanions reçus entre l'instant de détection du trafic de bourrage et l'instant de détection d'arrêt du trafic de bourrage.

Lorsqu'une sonde réseau reçoit de son homologue de l'autre côté du tunnel une requête MeasReq, ladite sonde réseau détermine donc quel intervalle d'historique d'échantillonnages est concerné par la demande. La sonde réseau retrouve alors en mémoire l'historique d'échantillonnages demandé.

Si à cause de pertes de paquets (e.g., perte du paquet fanion 2 dans la Fig. 6), l'historique d'échantillonnages disponible en mémoire de ladite sonde ne correspond pas exactement à un historique d'échantillonnages demandé, alors la sonde réseau retrouve en mémoire l'historique d'échantillonnages le plus proche de l'historique d'échantillonnages demandé et le transmet, ou des informations qui en sont dérivées par calculs, dans une réponse MeasResp. La réponse MeasResp inclut une information indiquant quel intervalle d'historique d'échantillonnages est réellement retourné, ou respectivement quel intervalle d'historique d'échantillonnages a été réellement utilisé pour dériver les informations retournées.

Ainsi, dans une étape 933, grâce aux informations de volumétrie stockées dans la table de mesure, la bande passante consommée peut être déterminée, comme déjà décrit ci-avant.

Préférentiellement, la bande passante consommée est déterminée par type de service. Et en faisant la somme des bandes passantes consommées pour les types de service transportés dans le tunnel de communication, la bande passante disponible, c'est-à-dire la capacité (actuelle) du lien de communication (e.g., tunnel de communication) est obtenue dans une étape 934.

Alors, dans une étape 935, la sonde réseau P2 902 transmet une réponse MeasResp (en réponse à la requête MeasReq) à la sonde réseau P1 901. La réponse MeasResp est reçue par la sonde P1 901 dans une étape 936.

En présence de l'orchestrateur 180, la réponse MeasResp peut être envoyée par la sonde réseau P2 902 à l'orchestrateur 180 (par exemple, dans le cas où la requête MeasReq a été transmise par la sonde réseau P1 901 sur instruction de l'orchestrateur 180).

Les calculs de bande passante consommée et disponible peuvent être réalisés, en variante, par la sonde réseau P1 901 ou par l'orchestrateur 180. La sonde réseau P2 902 fournit pour ce faire l'historique de volumétrie pertinent, extrait de la table de mesures.

Une fois que la bande passante réellement disponible est déterminée, un ajustement de politique d'admission de service peut alors être éventuellement opéré en conséquence.

**Revendications**

1. Procédé de détermination de bande passante sur un lien de communication sur lequel est transporté un flux de données entre un premier point de terminaison (120) en entrée du lien de communication, auquel est associée une première sonde réseau, et un second point de terminaison (120) en sortie du lien de communication, auquel est associée une seconde sonde réseau, le procédé comportant les étapes suivantes :

   - injecter (403) de façon périodique, par la première sonde réseau, des paquets fanions sur le lien de communication, les paquets fanions fournissant des repères temporels au flux de données sur le lien de communication ;
   - collecter (405) des informations d'horodatage de capture desdits paquets fanions par la seconde sonde réseau et des informations de volumétrie de données en sortie du lien de communication ;
   - injecter (404), par la première sonde réseau, un trafic de bourrage de sorte à créer une situation de congestion sur le lien de communication pendant une période de test ;
   - déterminer quelle bande passante est consommée pendant la période de test ; et
   - déterminer (408) la bande passante du lien de communication comme étant ladite bande passante consommée.

2. Procédé selon la revendication 1, dans lequel le lien de communication est un tunnel de communication dans un réseau de communication étendu.

3. Procédé selon la revendication 1 ou 2, dans lequel le flux de données transporté par le lien de communication comporte des sous-flux de données ayant des types de service distincts.

4. Procédé selon la revendication 3, dans lequel les paquets fanions sont injectés pour chaque type de service parmi lesdits types de service distincts.

5. Procédé selon la revendication 3 ou 4, dans lequel le trafic de bourrage a un type de service dédié.

6. Procédé selon la revendication 5, dans lequel le type de service dédié au trafic de bourrage est associé à la priorité la plus faible parmi lesdits types de service distincts.

7. Procédé selon l'une quelconque des revendications 3 à 6, dans lequel la bande consommée est calculée pour chaque type de service parmi lesdits types de service distincts, et la bande passante du lien de communication est obtenue en sommant la bande passante consommée calculée pour chaque type de service.

8. Procédé selon l'une quelconque des revendications 1 à 7, dans lequel, pour collecter les informations d'horodatage de capture et les informations de volumétrie, la deuxième sonde réseau comporte au moins une table de mesures (800) pour stocker un historique d'échantillonnages de paquets fanions capturés en sortie du tunnel de communication, chaque entrée de la table de mesures correspondant à un échantillon comportant :

   - un champ (804) d'information d'horodatage marquant l'instant auquel le paquet fanion correspondant à l'échantillon en question a été capturé ;
   - un champ (802) de numéro de séquence tel que contenu dans le paquet fanion correspondant à l'échantillon en question ; et
   - un champ (806) de comptage de données transitant sur le lien de communication entre le paquet fanion correspondant à l'échantillon en question et le paquet fanion correspondant à l'échantillon suivant dans la table de mesures.

9. Procédé selon la revendication 8, dans lequel la première sonde réseau transmet (930) à la seconde sonde réseau une requête requérant de transmettre en réponse (935) des informations de bande passante consommée qui sont dérivées par calculs (934) d'un historique d'échantillonnages des paquets fanions reçus par la seconde sonde réseau, la requête incluant une information d'intervalle de numéros de séquence de paquets fanions à considérer pour définir ledit historique sur la période de test.

10. Procédé selon la revendication 9, dans lequel lorsqu'à cause de pertes de paquets, l'historique d'échantillonnages disponible en mémoire de la seconde sonde ne correspond pas exactement à l'historique d'échantillonnages demandé par la requête, la seconde sonde réseau retrouve en mémoire un historique d'échantillonnages le plus proche de l'historique d'échantillonnages demandé, et indique en réponse à la requête quel intervalle de numéros de séquence de paquets fanions a été effectivement retrouvé.

11. Système de communication comportant un lien de communication sur lequel est transporté un flux de données entre un premier point de terminaison (120) en entrée du lien de communication, auquel est associée une première sonde réseau, et un second point de terminaison (120) en sortie du lien de communication, auquel est associée une seconde sonde réseau, le système comportant de la circuiterie électronique configurée pour effectuer une détermination de bande passante en :

- injectant (403) de façon périodique, par la première sonde réseau, des paquets fanions sur le lien de communication, les paquets fanions fournissant des repères temporels au flux de données sur le lien de communication ;
- collectant (405) des informations d'horodatage de capture desdits paquets fanions par la seconde sonde réseau et des informations de volumétrie de données en sortie du lien de communication ;
- injectant (404), par la première sonde réseau, un trafic de bourrage de sorte à créer une situation de congestion sur le lien de communication pendant une période de test ;
- déterminant quelle bande passante est consommée pendant la période de test ; et en
- déterminant (408) la bande passante du lien de communication comme étant ladite bande passante consommée.

[Fig. 1A]

[Fig. 1B]

[Fig. 2]

[Fig. 3]

[Fig. 4]

```
┌─────────────────────────────────┐
│   Détection de tunnel de        │
│   communication                 │ ⌐ 401
└─────────────────────────────────┘
              │
              ▼
┌─────────────────────────────────┐
│  Mise en place de communications│
│  inter-sondes                   │ ⌐ 402
└─────────────────────────────────┘
              │
              ▼
┌─────────────────────────────────┐
│  Déclenchement d'injection      │
│  de paquets fanions             │ ⌐ 403
└─────────────────────────────────┘
              │
              ▼
┌─────────────────────────────────┐
│  Déclenchement d'injection      │
│  de trafic de bourrage          │ ⌐ 404
└─────────────────────────────────┘
              │
              ▼
┌─────────────────────────────────┐
│  Mesures de volumétrie de trafic│
│  du tunnel de communication     │ ⌐ 405
└─────────────────────────────────┘
              │
              ▼
┌─────────────────────────────────┐
│  Arrêt d'injection              │
│  de trafic de bourrage          │ ⌐ 406
└─────────────────────────────────┘
              │
              ▼
┌─────────────────────────────────┐
│  Arrêt d'injection              │
│  de paquets fanion              │ ⌐ 407
└─────────────────────────────────┘
              │
              ▼
┌─────────────────────────────────┐
│  Calcul de bande passante à     │
│  partir des mesures             │ ⌐ 408
│  volumétriques de trafic        │
└─────────────────────────────────┘
```

[Fig. 5]

[Fig. 6]

[Fig. 7]

[Fig. 8]

| Idx (801) | Seq (802) | FTS (803) | CTS (804) | QoP (805) | QoB (806) |
|---|---|---|---|---|---|
| 0 (811) | 38 | $X0 = X$ | $X0 + L0$ | QoP0 | QoB0 |
| 1 (812) | 39 | $X1 = X + TS$ | $X1 + L1$ | QoP1 | QoB1 |
| ... (813) | ... | ... | ... | ... | ... |
| 255 (814) | 293 | $X255 = X + 255*TS$ | $X255 + L255$ | QoP255 | QoB255 |

800

[Fig. 9]

Europäisches
Patentamt

European
Patent Office

Office européen
des brevets

**RAPPORT DE RECHERCHE EUROPEENNE**

Numéro de la demande

EP 25 16 6030

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 4 207 638 A1 (AIRBUS DEFENCE & SPACE SAS [FR]) 5 juillet 2023 (2023-07-05) * le document en entier * ----- | 1-11 | INV. H04L43/04 H04L43/0882 H04L43/106 |
| A | US 7 961 637 B2 (SPIRENT COMM OF ROCKVILLE INC [US]) 14 juin 2011 (2011-06-14) * le document en entier * ----- | 1-11 | H04L43/12 H04L43/55 H04L43/0894 |

**DOMAINES TECHNIQUES RECHERCHES (IPC)**

H04L

Le présent rapport a été établi pour toutes les revendications

| Lieu de la recherche | Date d'achèvement de la recherche | Examinateur |
|---|---|---|
| Munich | 31 mars 2025 | García Bolós, Ruth |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

........................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 16 6030

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-03-2025

| Document brevet cité au rapport de recherche | | Date de publication | Membre(s) de la famille de brevet(s) | | Date de publication |
|---|---|---|---|---|---|
| EP 4207638 | A1 | 05-07-2023 | EP | 4207638 A1 | 05-07-2023 |
|  |  |  | US | 2023216772 A1 | 06-07-2023 |
| US 7961637 | B2 | 14-06-2011 | US | 2005270982 A1 | 08-12-2005 |
|  |  |  | WO | 2005122456 A2 | 22-12-2005 |

EPO FORM P0460

Pour tout renseignement concernant cette annexe : voir Journal Officiel de l'Office européen des brevets, No.12/82